# EUROPÄISCHE PATENTANMELDUNG

(11) **EP 1 477 057 A1**
(43) Veröffentlichungstag der Anmeldung: **17.11.2004**
(21) Anmeldenummer: 04009773.5
(22) Anmeldetag: 24.04.2004
(51) Int. Cl.: A01K 31/22

(54) **Volierensystem für Hühner oder dergleiche**

(30) Priorität: 08.05.2003 DE 20307110 U
(71) Anmelder: Kühlmann, Josef, D-48366 Laer (DE)
(72) Erfinder: Kühlmann, Josef, 48366 Laer (DE); Möllenbeck, Reinhard, 33142 Wewelsburg (DE)
(74) Vertreter: Habbel, Hans-Georg, Dipl.-Ing.

(57) **Zusammenfassung**

Die Erfindung bezieht sich auf ein Volierensystem für Hühner od. dgl., bestehend aus mehreren Etagen, die Freibereichsflächen bilden, wobei in den Freibereichsflächen Legenester und im Bereich der Legenester kotgeschützte Versorgungseinrichtungen vorgesehen sind.

## Beschreibung

Die Erfindung bezieht sich auf ein Volierensystem für Hühner od. dgl., bestehend aus mehreren Etagen, die Freibereichsflächen bilden.

Eine gattungsbildende Einrichtung für ein Volierensystem für Geflügel ist aus der CH 665 749 A5 bekannt. Bei dieser Anordnung werden an sich in Längsrichtung des Stalles erstreckenden Rahmen oder Gittern entsprechende Halterungseinrichtungen für die Tiere angeordnet, nämlich Tränkeinrichtungen, Futtertröge, ggf. Beleuchtungseinrichtungen usw. Unterhalb von Bodengittern, durch die der Kot der Tiere hindurchfallen kann, sind Zwischenböden vorgesehen, die den Kot sammeln und von denen der Kot über entsprechende Hilfsmittel auf eine Transportvorrichtung geführt werden kann. Innerhalb des gesamten Stalles ist gesondert eine Legenestanordnung vorgesehen, von denen aus die Eier auf eine Fördereinrichtung gelangen können, von der aus sie nach außen gefördert werden.

Diese Anordnung hat den Vorteil, daß die Tiere sich vollkommen frei bewegen können, auf jeder Etage Futter aufnehmen können und Freibereichsflächen vorhanden sind, so daß eine große Anzahl von Tieren pro Quadratmeter Bodenfläche untergebracht werden kann und trotzdem die Tiere artgerecht gehalten werden können.

Die allein stehenden Legenester oder Legenesteinrichtungen haben den Nachteil, daß sie durchgehend in einer Reihe ausgebildet sind und damit schwer zugänglich sind. Dies führt zu Verschmutzungen, verbunden mit Keimbelastungen. Reparaturen und Wartungen sind ebenfalls schwierig. Außerdem ist die Grundversorgung mit Futter, Wasser usw. nicht in einer Ebene mit den Nestern oder nur teilweise und führt dazu, daß die Tiere sich schlecht entwickeln und kränkeln. Da sich in den übrigen Etagen keine Nester befinden und somit keine Eierbänder vorgesehen sind, ergeben sich eine mehr oder weniger große Anzahl von Eier, die in das Volierensystem verlegt werden. Diese müssen mit Hand abgesucht werden und weisen in der Regel eine höhere Verschmutzung auf bzw. werden von den Hühnern angepickt.

Der Erfindung liegt die Aufgabe zugrunde, ein Volierensystem zu schaffen, das einfach hergestellt werden kann, beispielsweise im Baukastensystem, wobei der Abtransport der Eier erleichtert wird und bei dem die Legenester im Bereich der Freibereichsflächen vorgesehen werden, so daß die Tiere ohne Schwierigkeiten von den Freibereichsflächen zu den Legenestern gelangen können.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgesehen, daß in den Freibereichsflächen Legenester, die vorzugsweise sogar auf Lücke zueinander angeordnet sind, vorgesehen werden, wobei alle Versorgungseinrichtungen kotgeschützt ausgebildet sind.

Ein Ausführungsbeispiel der Erfindung wird nachfolgend anhand der Zeichnungen erläutert. Die Zeichnungen zeigen dabei in
- Fig. 1: eine Ansicht auf einen Teil eines Stalles mit drei mehretagigen Volieren, in

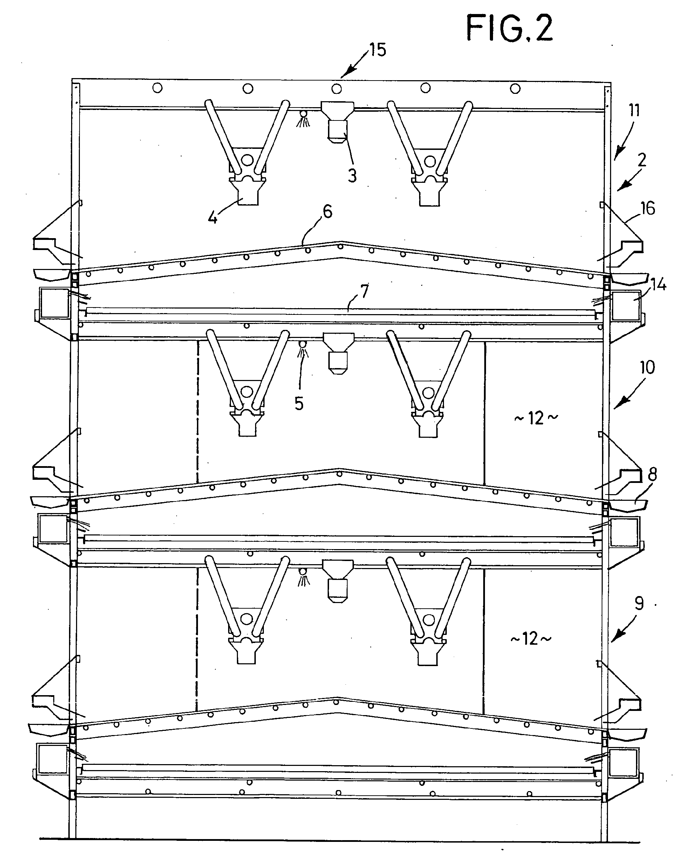

- Fig. 2: in größerem Maßstab eine Voliere und in
- Fig. 3: in wiederum größerem Maßstab eine Aufsicht auf eine Volierenetage zur Verdeutlichung der Anordnung und Lage der Legenester.

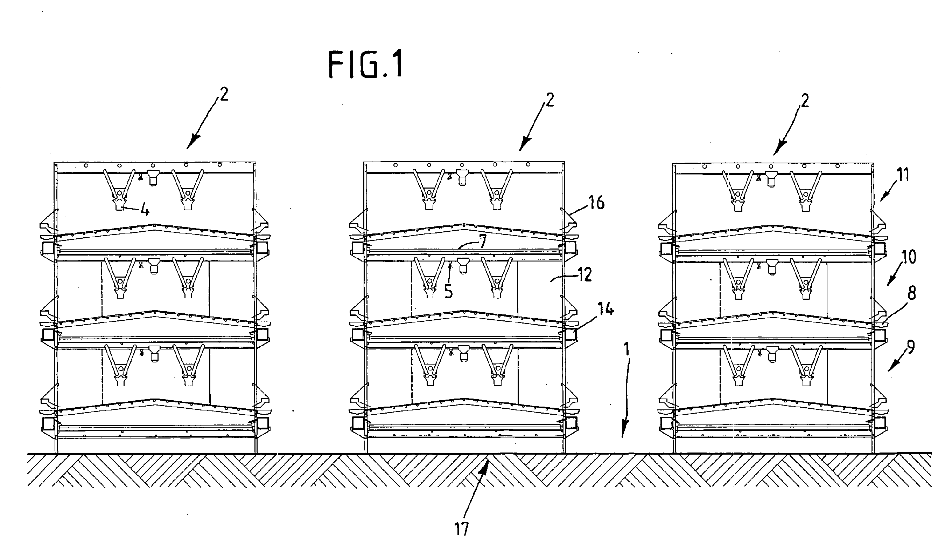

In den Zeichnungen sind auf einer Bodenfläche 17 drei Volieren dargestellte, die langgestreckt ausgebildet sind und aus einem entsprechenden gitterartigen Rahmengestell bestehen, wobei in Fig. 1 jede Voliere drei Etagen 9, 10 und 11 aufweist. Es wird aber ausdrücklich darauf hingewiesen, daß die Erfindung keineswegs auf die Anordnung von drei Etagen eingeschränkt ist.

Innerhalb des Rahmens oder Gitters jeder Voliere sind drei Etagen 9, 10 und 11 vorgesehen, wobei jede Etage im unteren Bereich ein Kotsammelband 7 aufweist. Oberhalb des Kotsammelbandes 7 ist ein Bodengitter oder eine glatte Bodenfläche vorgesehen, die eine Freibereichsfläche 6 bildet, über die die Hühner frei laufen können. An der Decke jeder Etage ist beispielsweise eine Tränkeinrichtung 3 vorgesehen und weiterhin sind Futtertröge 4 aufgehängt, die ebenfalls kotgeschützt ausgebildet sind. An der Außenseite jeder Etage ist eine Anflugbühne 16 vorgesehen und eine Kotbandbelüftungsanlage 14 sowie Eiersammelbänder 8, die die aus Legenestern 12 gelangenden Eier sammeln und über die die Eier abgefördert werden können.

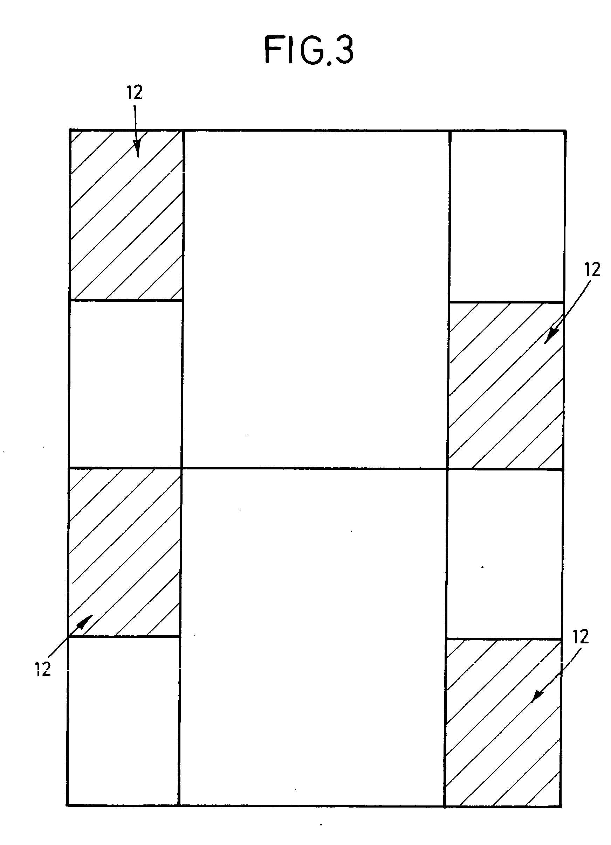

In den unteren Etagen 9, 10 sind Legenester 12 vorgesehen, die - wie Fig. 3 zeigt - an der Außenseite jeder Etage angeordnet sind und auf Lücke stehen, so daß die Außenseiten der Etagen nicht vollständig durch die Legenester 12 abgeschlossen sind, sondern hier ist noch eine gute Belüftung, ein guter Lichteinfall und eine gute Zugänglichkeit für die Tiere möglich.

Außerdem können in jeder Etage Beleuchtungseinrichtungen 5 vorgesehen werden.

Der auf dem Boden 17 zwischen den einzelnen Volieren 2 gebildete Raum ist als Scharrraum 1 bezeichnet und ermöglicht den Tieren hier zu scharren.

Bei dem dargestellten Ausführungsbeispiel sind in der obersten Etage 11 Sitzstangen 15 vorgesehen, die von den Tieren während der Nacht aufgesucht werden können.

## Patentansprüche

1. Volierensystem für Hühner od. dgl., bestehend aus mehreren Etagen (9, 10, 11), die Freibereichsflächen (6) bilden, **dadurch gekennzeichnet, daß** in den Freibereichsflächen (6) Legenester (12) und im Bereich der Legenester (12) kotgeschützte Versorgungseinrichtungen (3, 4) vorgesehen sind.

2. Volierensystem nach Anspruch 1, **dadurch gekennzeichnet, daß** die Freibereichsflächen (6) als Gitter ausgebildet sind, die zu einem kotgeschützten Eiersammelband (8) hin mit Neigung angeordnet sind.

3. Volierensystem nach Anspruch 1 oder 2, **dadurch gekennzeichnet, daß** die Eiersammelbänder (8) im äußeren Bereich der einzelnen Etagen (9, 10, 11) angeordnet sind.

4. Volierensystem nach einem oder mehreren der vorhergehenden Ansprüche, **dadurch gekennzeichnet, daß** die Legenester (12) bis auf die Zugangsöffnungen im wesentlichen geschlossen sind.

5. Volierensystem nach einem oder mehreren der vorhergehenden Ansprüche, **dadurch gekennzeichnet, daß** die Legenester (12) auf Lücke zueinander angeordnet sind.

6. Volierensystem nach einem oder mehreren der vorhergehenden Ansprüche, **dadurch gekennzeichnet, daß** der Boden der Legenester (12) im wesentlichen durch das Gitter der Freibereichsfläche (6) gebildet wird.

7. Volierensystem nach einem oder mehreren der vorhergehenden Ansprüche, **dadurch gekennzeichnet, daß** jede Etage (9, 10, 11) mit Anflugbühnen (16) versehen ist.

8. Volierensystem nach einem oder mehreren der vorhergehenden Ansprüche, **dadurch gekennzeichnet, daß** die Legenester (12) als Abrollnester ausgebildet sind.
